# EUROPEAN PATENT APPLICATION

(11) **EP 0 769 882 A1**
(43) Date of publication of application: **23.04.1997**
(21) Application number: 96202329.7
(22) Date of filing: 21.08.1996
(51) Int. Cl.: H04Q 3/62, H04M 7/00

(54) **System for signal transfer between private branch exchanges**

(30) Priority: 20.10.1995 NL 1001458
(71) Applicant: Koninklijke PTT Nederland N.V., 2509 CH Den Haag (NL)
(72) Inventor: Benchellal, Azeddine, 2264 XZ Leidschendam (NL)

(57) **Abstract**

System for the transfer of signalling messages between public branch exchanges (PBXs), particularly where such PBXs are part of a virtual network (Virtual Private Network or VPN). Problem is that for carrying out supplementary services (and telephony), PBXs utilise a protocol (QSIG) which is not capable of co-operating with ISDN, so that it would not be possible to provide the supplementary services across the VPN. In order to be capable of exploring the possibilities of the public ISDN and no longer to have to use rented lines, it is now proposed for the transfer of the signalling traffic required for supplementary services to make use of the ISDN PMBS (Packet Mode Bearer Service). The signalling traffic originating from a source PBX is transferred, by way of the PMBS, to an X.25 Packet Handler (PH), subsequently by way of the X.25 network to a PH on the destination side, and there, by way of the ISDN PMBS, to the destination PBX.

## Description

### A. BACKGROUND OF THE INVENTION

The invention relates to a system for the transfer of signalling messages between private branch exchanges (PBXs), particularly where such PBXs are part of a virtual network (Virtual Private Network or VPN).

A VPN is understood to mean an assembly of PBXs at various locations, with the subscribers being totally unaware that they are making use of various PBXs.

Usually, the various exchanges are connected to one another by means of rented lines by which both the subscriber traffic and the signalling traffic are transferred.

Together with the being operational of the public ISDN [Integrated Services Digital Network], the need is also being felt of connecting PBXs which are part of one and the same VPN with one another by way of the public ISDN.

The problem arises, however, that PBXs utilise a protocol (QSIG) for carrying out telephony and supplementary services which are not capable of co-operating with ISDN, as a result of which it might not be possible to specifically provide the supplementary services across the VPN. In other words, it might be possible for subscribers physically connected to one and the same PBX to make use of supplementary services, but not for subscribers connected to PBXs at various locations. Although it would be an option to transfer the signalling traffic for carrying out supplementary services by way of a normal ISDN traffic channel, such is an expensive solution, partly due to the fact that the signalling traffic for supplementary services is of so low an intensity that an ISDN channel would be much too amply dimensioned for this purpose, which would be expensive and inefficient.

### B. SUMMARY OF THE INVENTION

In order to be capable of using the options of the public ISDN and not to have to use rented lines or expensive ISDN channels, it is now proposed for the transfer of signalling traffic for supplementary services to make use of the ISDN PMBS (Packet Mode Bearer Service), a service which makes it possible to transfer various non-intensive data flows by way of a common (time-shared) ISDN D-channel. This option is made use of by transferring the signalling traffic originating from a source PBX by way of the PMBS to an (X.25) Packet Handler, then by way of a second public network, such as the X.25 network, to a packet handler [PH] at the target side, and there, by way of the ISDN PMBS, to the target PBX.

### C. EXEMPLARY EMBODIMENTS

FIG. 1 diagrammatically shows the splitting of a call arriving at a PBX into two outgoing calls.

FIG. 2 diagrammatically shows the signalling traffic between two PBXs by way of the ISDN PMBS and a second network (X.25).

FIG.3 shows the signalling flows for a successful PBX/ISDN PMBS call.

In the private networks, the services are provided according to the standardised QSIG protocol, and in the public ISDN they are provided according to the standardised ISDN protocol. Said two protocols cannot co-operate with one another, particularly in the event of the supplementary services. The interworking problems between the two protocols have not been solved so far, in other words, the QSIG signalling information is not capable of being mapped onto the ISDN signalling information.

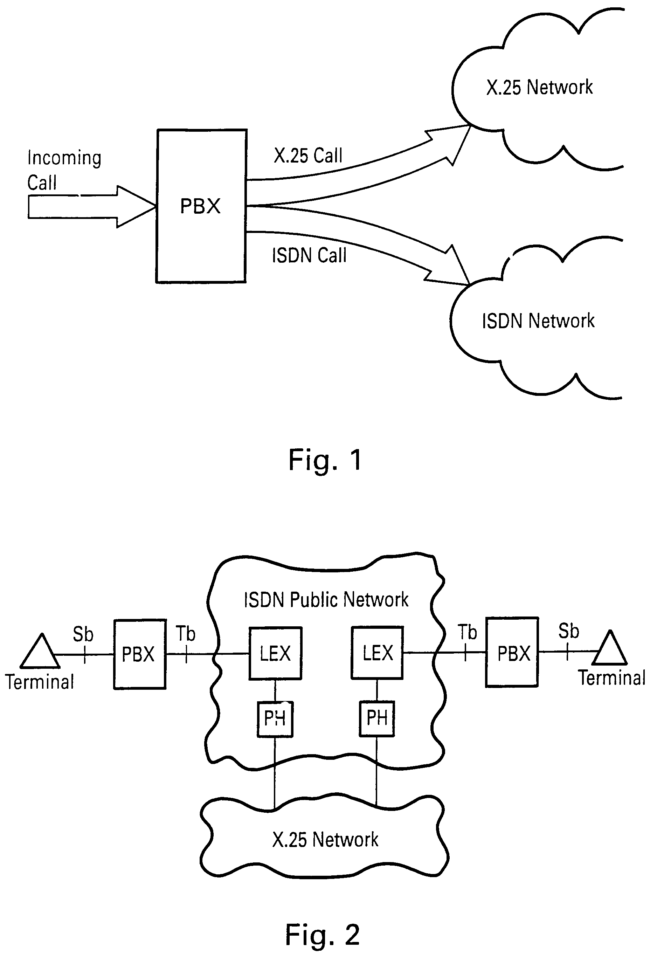

The user of the private network does not want to be bothered by the interworking problems and the coupling of the PBXs. One moment, the user wants to set up an "ordinary" telephone call with a colleague, and at another moment a telephone call with supplementary services. In the former case, the user demands a "bare" connection from the network (64 kbit/s ISDN connection for telephony) and in the latter case the user demands a connection for telephony and the option to activate and to deactivate the supplementary services (e.g., Call Forwarding, Call Completion on Busy Subscriber etc.). The signalling information for the QSIG-controlled (supplementary) services cannot be supported by the public network. In order to still be capable of transporting said signalling information through the network, the PBX making use of the PMBS service may split an incoming call into two outgoing calls - an ordinary ISDN call for telephony and a PMBS data call for the signalling information of the supplementary services - as is illustrated in FIG. 1.

Since the public network including the PBX is completely transparent to the terminal, the terminal (the user) is not capable of indicating anything on the way in which the connection in the network is to be set up. In order to be capable of meeting the needs of the user, the PBX must distinguish between the various calls. For an incoming call, the PBX must detect whether an ordinary telephone connection at the public ISDN network must be requested for this purpose, or a telephone connection as well as a PMBS data connection.

The way in which the private networks (PBXs) according to the present invention may be coupled to one another, is shown in FIG. 2. The users of the private networks are connected to the PBXs by way of an S interface (ISDN 2). The PBXs are coupled to the local exchanges LEX of the public ISDN by way of a T interface (ISDN 30). The local exchanges are coupled to the public X.25 network by way of a packet handler PH. At the moment the user requests a telephone call, the PBX sets up a connection with the X.25 packet handler by way of the ISDN D-channel on the T interface (the primary rate interface). The packet handler subsequently sets up an X.25 connection with the packet handler at the receiving side, which then sets up a connection with the receiving terminal. Apart from said data connection, a telephone connection is set up by way of the ordinary ISDN public network.

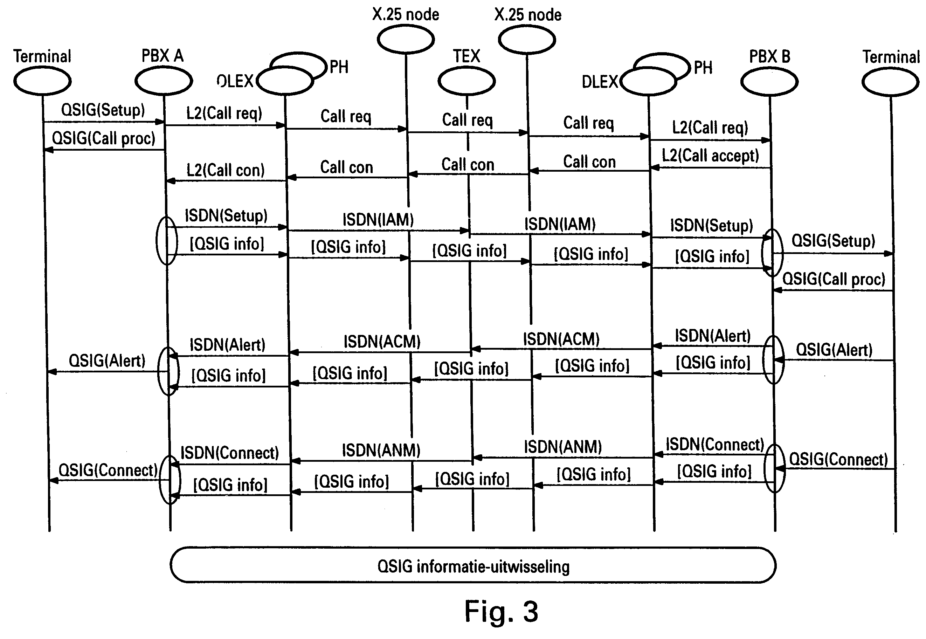

FIG. 3 shows the way in which a successful call is brought about whereby a telephone connection and a data connection are set up. In order to be capable of activating a service, the terminal starts by transmitting a SETUP message to PBX A. PBX A first sets up a data connection (having SAPI-16) with PBX B by way of the X.25 network (in conformity with ETS 300 049). Subsequently, the PBX A distinguishes between the QSIG information required for setting up an ordinary telephone connection and the QSIG information required for the supplementary services. The first type of information is accommodated in an ISDN SETUP message and transmitted to the public ISDN. The second type of information is exchanged by way of the packet handler and the X.25 network. At the receiving side, the PBX B receives the ISDN SETUP message and the additional QSIG information, subsequently to turn it into a QSIG SETUP message and to transmit it to the receiving terminal. The receiving terminal replies with a local QSIG CALL PROCEEDING message and two global messages, QSIG ALERTING and QSIG CONNECT, which are subsequently transported back to the transmitting terminal in the same way as the QSIG SETUP message. After the call has been set up, there may be exchanged, by way of the QSIG protocol, information by way of the X.25 connection for the purpose of the supplementary services which are activated or deactivated throughout the call. It should be noted that in FIG. 3 the messages series L2(CALL REQ) at PBX A ... L2(CALL REQ) at PBX B, and L2(CALL ACCEPT) at PBX B ... L2(CALL CON) at PBX A relate to the supplementary services and the subsequent messages series, from ISDN(SETUP) on the "bare" telephone connection.

### D. REFERENCES

EIS 300049:ISDN Virtual Call (VC) and Permanent Virtual Call (PVC) bearer services provided by the D-channel of the user access basic and primary rate.

## Claims

1. System for the transfer of signalling messages between private branch exchanges (PBXs), particularly where said PBXs are included in a virtual network, characterised in that in the event of connection calls between PBXs which, apart from the exchange of user information, also comprise the user capability ofdisposing of supplementary services, there is set up, by way of the public ISBN, a first connection between said PBXs which relates to the exchange of user information, as well as a second connection between the same PBXs, this time, however, by means of the ISDN PMBS on the sides of both PBXs, by way of a second network.

2. System according to claim 1, characterised in that the said second network is an X.25 network.
